# EUROPEAN PATENT APPLICATION

(11) **EP 4 588 848 A1**
(43) Date of publication of application: **23.07.2025**
(21) Application number: 24153060.9
(22) Date of filing: 22.01.2024
(51) Int. Cl.: B65G 1/04

(54) **A VEHICLE**

(71) Applicant: AUTOSTORE TECHNOLOGY AS, 5578 Nedre Vats (NO)
(72) Inventor: NURZYNSKI, Daniel, 5578 Nedre Vats (NO)
(74) Representative: Kilburn & Strode LLP

(57) **Abstract**

The present disclosure relates to vehicle for an automated storage and retrieval system. The vehicle comprises a plurality of wheels for movement along rails of an automated storage and retrieval system and at least one rotatable lift shaft for winding and unwinding of a lifting line. The at least one rotatable lift shaft is vertically spaced from the plurality of wheels and extends from a side surface of the vehicle to form a cantilever, wherein a first end of the rotatable lift shaft which is distal from the side surface of the vehicle is unsupported. The lift shaft is rotatably mounted to the vehicle by a bearing assembly which is distal from the first end. The bearing assembly comprises a first bearing coupled to the lift shaft, and a second bearing coupled to the lift shaft at a distal side of the lift shaft from the first bearing, the second bearing thereby counterbalancing the first end of the lift shaft.

## Description

### TECHNICAL FIELD

The present disclosure relates to a vehicle for an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Robotic container handling vehicles in which containers are lifted and lowered by a container lifting device which is cantilevered from a side surface of a body of the container handling vehicle, are known. Cantilevered designs are preferable in many cases, because they enable the centre of mass of the container handling vehicle to be lower, which in turn enables acceleration of the container handling vehicle to be higher. Speed of storage and retrieval within an automated system is thereby improved. However, in the cantilevered design, the maximum load which can be lifted and lowered by the container lifting device is limited. In particular, if the weight of a load lifted by the container lifting device is too high, the container handling vehicle will topple. One solution is to increase the weight of the parts of the vehicle which are located within the footprint of the vehicle's wheels, or even to add ballast to the vehicle, in order to provide a greater degree of counterbalancing for loads carried by the cantilevered container lifting device. However, increasing vehicle weight may compromise energy efficiency and/or may compromise vehicle acceleration. Accordingly, there is demand for cantilevered container handling vehicles having improved load carrying capacity, preferably without compromising on energy efficiency or vehicle acceleration.

One or more aspects of the present invention are set out in the appended claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a partial perspective view of a first robotic container handling vehicle having a known container lift arrangement;
Fig. 6 shows a cross-sectional side view of the robotic container handling vehicle according to Fig. 5;
Fig. 7 shows a close-up of a single rotatable lift shaft from the known container lift arrangement according to Figs. 5 and 6;
Fig. 8 shows a partial perspective view of a first robotic container handling vehicle having a container lift arrangement according to the present disclosure;
Fig. 9 shows a cross-sectional side view of the robotic container handling vehicle according to Fig. 8;
Fig. 10 shows a close-up of a single rotatable lift shaft from the container lift arrangement according to the present disclosure, according to a first configuration of the present disclosure;
Fig. 11 shows a close-up of a single rotatable lift shaft from the container lift arrangement according to the present disclosure, according to a second configuration of the present disclosure;
Fig. 12, shows a partial cross-section view of the vehicle of Fig. 8;
Fig. 13 shows a vehicle according to Fig. 8, further including a casing at least partially surrounding the container lift arrangement; and
Fig. 14 shows a cross-sectional side view of the vehicle of Fig. 13, carrying a container bin.

Like reference numerals are used for like components throughout the description.

### DETAILED DESCRIPTION

In overview, the present disclosure relates to a cantilevered vehicle for an automated storage and retrieval system, wherein the vehicle has intrinsically improved stability and/or improved lifting capacity relative to known cantilevered systems. In particular, support for component(s) of the cantilevered container lifting device is moved away from a distal end of the cantilevered container lifting device, thereby shifting the total vehicle weight towards or within the footprint of the vehicle's wheels. By moving a greater portion of the vehicle mass to within the footprint of the vehicle, improved counterbalancing of loads carried by the cantilevered container lifting device is achieved, without extraneous counterbalancing or ballast being required.

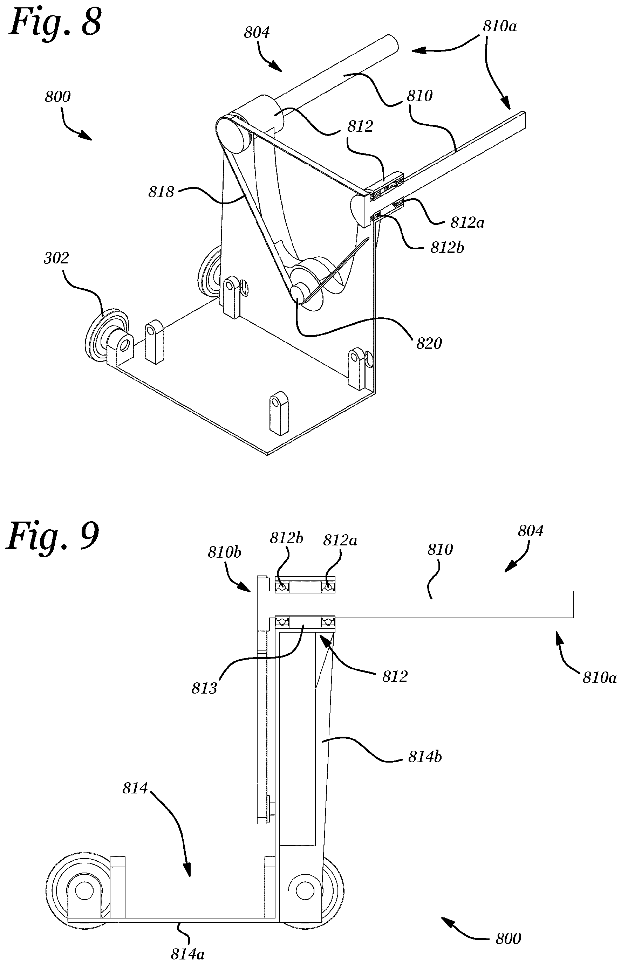

More specifically, the cantilevered rotatable lift shaft of the vehicle according to the present disclosure is unsupported at its distal end, and is instead entirely supported by components, such as a bearing assembly, which is/are distal from the unsupported distal end of the rotatable lift shaft. Accordingly, not only are any bearings or other support mechanisms moved away from the unsupported distal end and closer to the body of the vehicle, but there is no longer a need for a separate structural cantilever support to extend in the X-Y plane from the top of the body and around the distal ends of the rotatable lift shafts in order to support the distal ends of the rotatable lift shafts. Therefore, according to the solution of the present disclosure, as is described in more detail in Figs. 8-14 below, no such separate structural cantilever support is present. Support of the rotatable lift shafts is instead moved away from the distal ends. By moving support for the rotatable lift shaft towards (and preferably within) the body, and thus enabling the separate structural cantilever support to be dispensed with, a greater portion of the vehicle weight is moved to within the footprint of the vehicle's wheels, thus improving counterbalancing of the cantilevered container lifting device by the vehicle.

### Automated storage and retrieval system overview

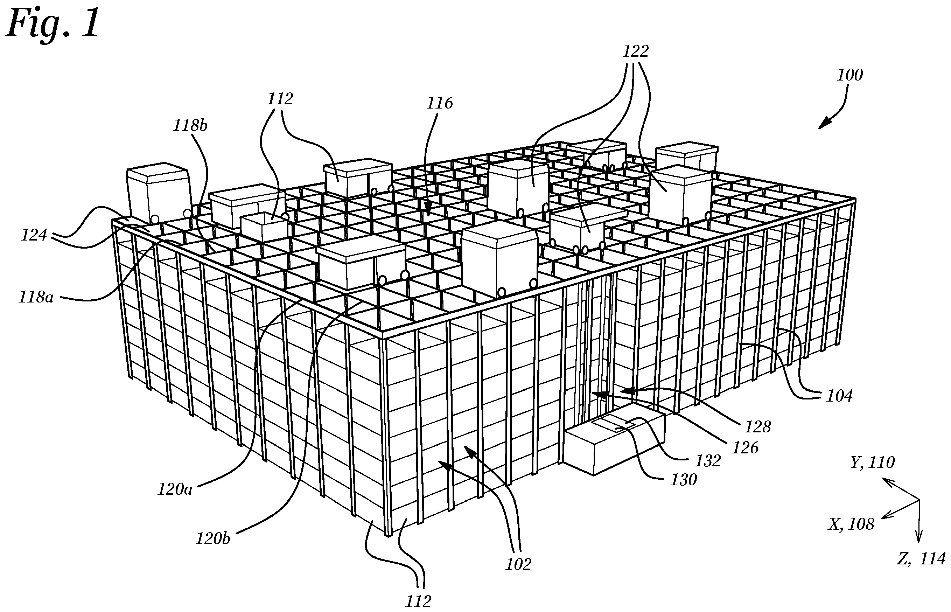

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

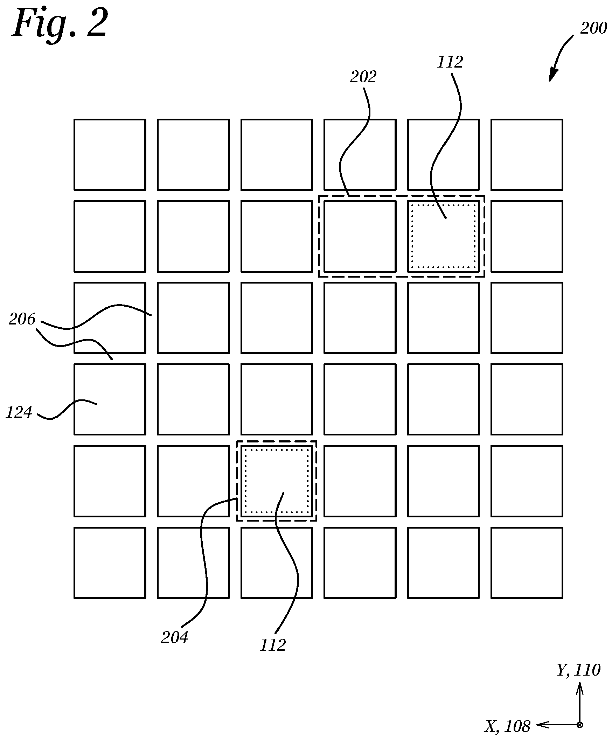

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

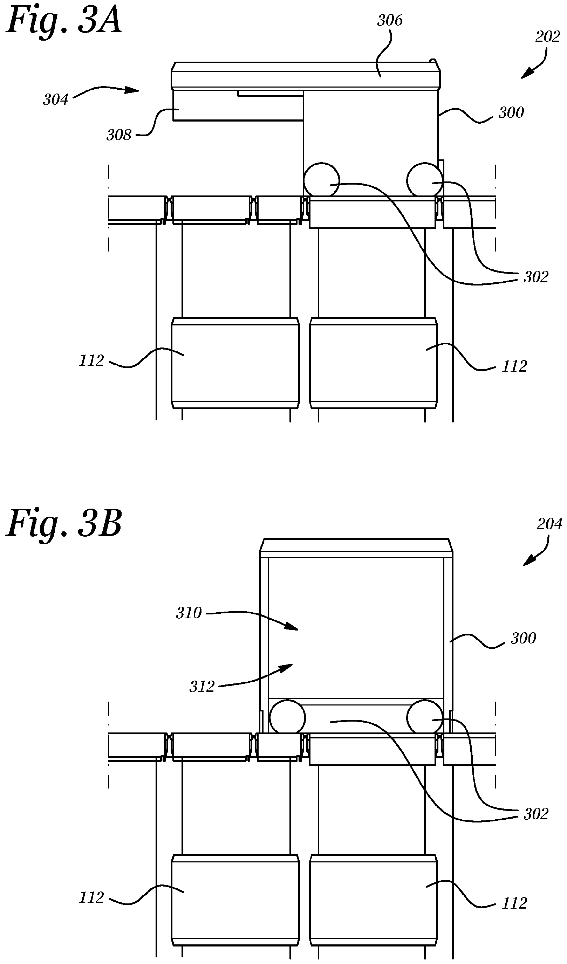

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

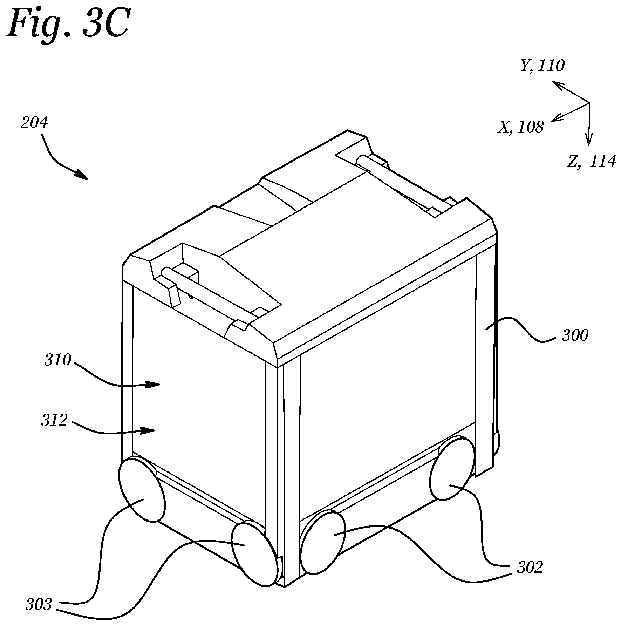

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

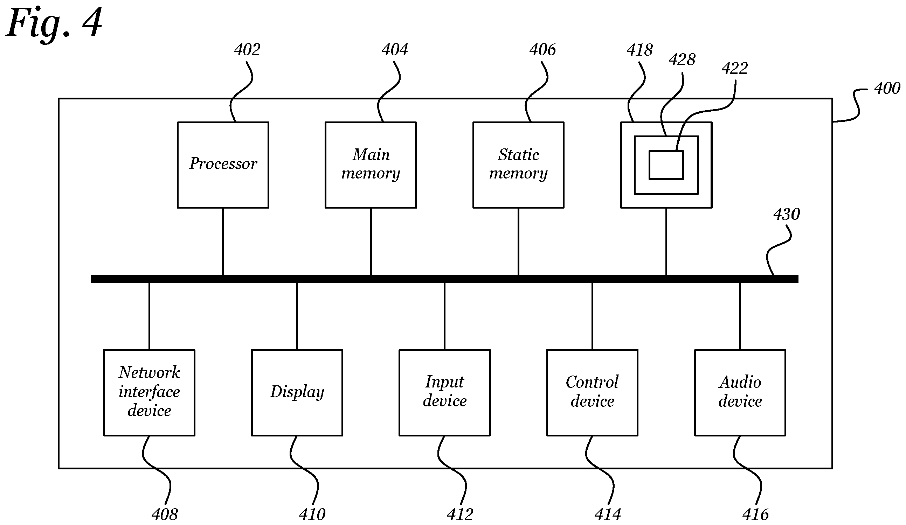

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Known lifting device

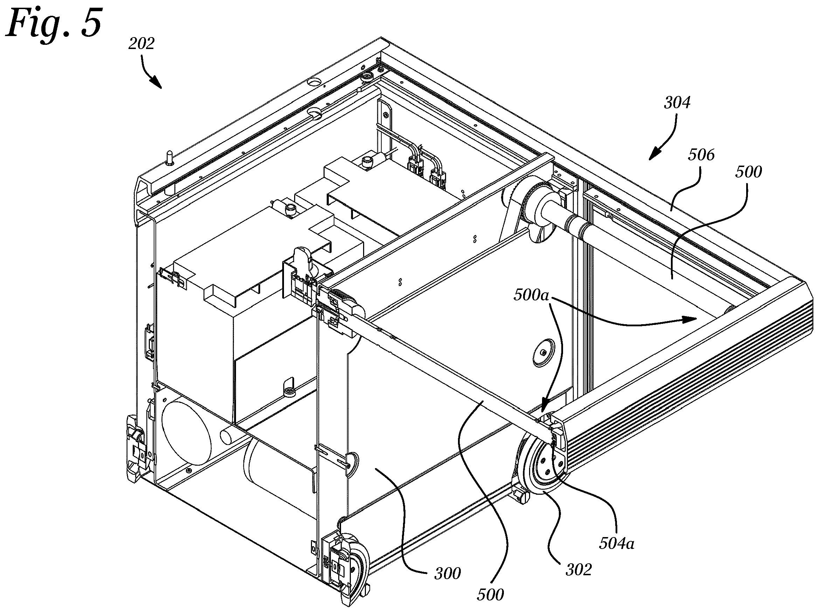

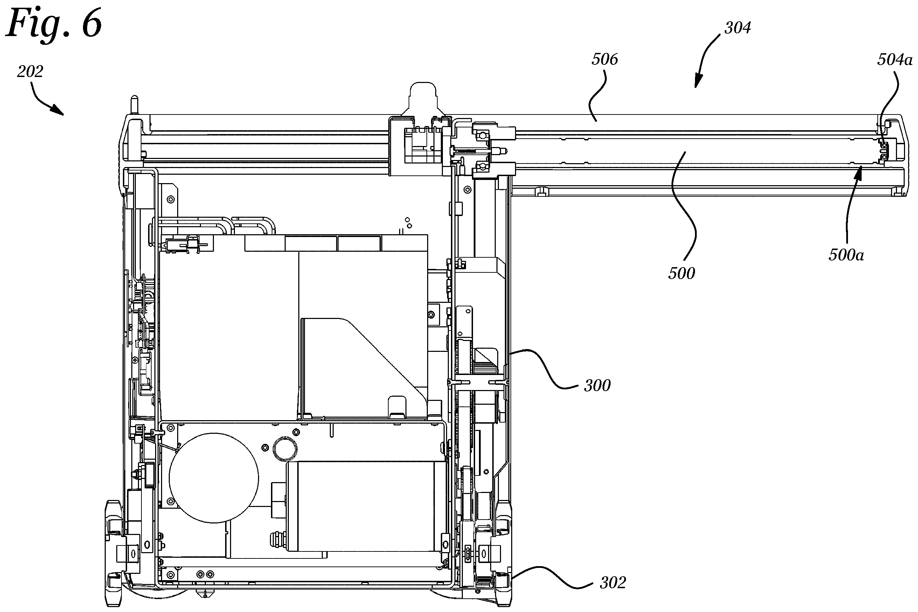

Fig. 5 shows a partial perspective view of the first type of robot 202, incorporating a known lifting device 304. Fig. 6 shows a cross-sectional side-view of the Fig. 5 robot. As described above, the first type of robot 202 is a cantilever robot. As shown, the robot 202 comprises a body 300, which houses much of the componentry of the robot 202. The componentry housed within the body 300 is not described in detail here. However, as the skilled reader will understand, the componentry housed within the body 300 typically includes a battery, vehicle drive means, lift drive means, and control systems for controlling the drive means. As can be seen from Fig. 5, the wheels 302 are located adjacent the external surface of the body 300, such that the body 300 is located entirely within the footprint of the wheels 302. By extension, the componentry housed within the body 300 is also located within the footprint of the wheels 302.

As shown in Figs. 5 and 6, the lifting device 304 of the robot 202 comprises a pair of parallel rotatable lift shafts 500 which extend from a side surface 502 of the body 300. The first ends 500a of the parallel rotatable lift shafts 500 thus extend distally from the side surface 502 of the body 300. In order to support the first ends 500a of the parallel rotatable lift shafts 500, the cantilever element 306 comprises structural cantilever support 506, which itself is cantilevered from the side surface of the body 300, and which attaches to the first ends 500a of the parallel rotatable lift shafts 500 by means of respective bearings 504a. Accordingly, the lift shafts 500 are rotatable for lifting and lowering of a load therefrom, and are also supported at their first ends 500a by the structural cantilever support 506.

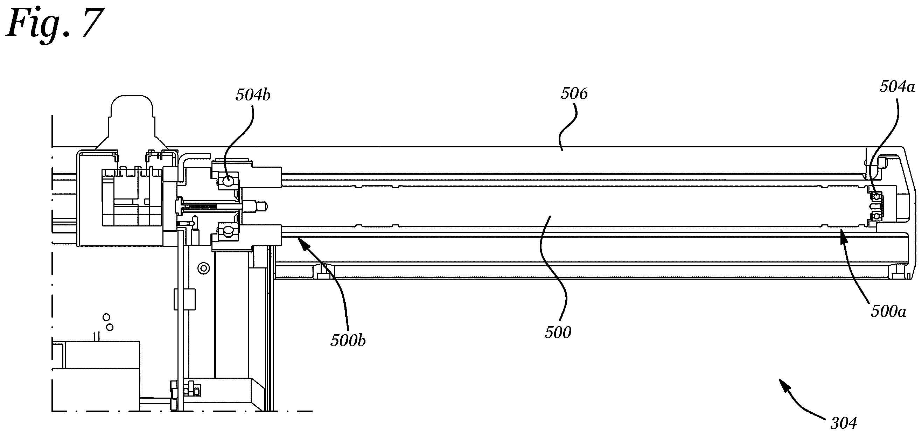

Fig. 7 shows a close-up of a single rotatable lift shaft from the known lifting device 304 according to Figs. 5 and 6. As shown, a first bearing 504a is provided at the first end 500a of the rotatable lift shaft 500 which is distal from the body 300; and a second bearing 504b is provided at the second end 500b of the rotatable lift shaft 500 which is proximal to the body 300. The first bearing 500a is outboard of the vehicle body 300, while the second bearing 500b is inboard of the vehicle body 300. The first bearing 500a is supported by the structural cantilever support 506, such that the structural cantilever support 506 supports the first end 500a of the rotatable lift shaft 500. The second bearing 500b is supported by the vehicle chassis (not shown in Fig. 7).

In order to provide sufficient support to the lift shafts 500, the structural cantilever support 506 is securely attached to the top of the body 300, and is formed of metal, for example aluminium, having sufficient thickness and reinforcement to prevent drooping of the lift shafts 500. As a result, the structural cantilever support 506 represents a substantial outboard weight of the vehicle, as well as increasing the total vehicle weight. Herein, an outboard weight is defined as a weight which is located outside of the footprint of the wheels 302, while an inboard weight is defined as a weight which is located within the footprint of the wheels. As the skilled reader will understand, inboard weight is beneficial for counterbalancing loads carried by the lifting device 304, whereas outboard weight is counterproductive for counterbalancing loads carried by the lifting device 304.

The inventor of the subject matter according to present disclosure has found a solution in which more of the weight of the lifting device 304 is shifted inboard, thereby intrinsically increasing the counterbalancing effect provided by the vehicle. An exemplary embodiment embodying the aforementioned solution according to the present disclosure will now be described.

### Lifting device according to the present disclosure

Fig. 8 shows a partial perspective view of a vehicle 800 according to the present disclosure. Fig. 9 shows a cross-sectional view of the vehicle 800 from Fig. 8. The vehicle 800 may be a first robotic container handling vehicle, for example a cantilevered robot 202 according to Fig. 3A. However, the vehicle 800 is designed to address the drawbacks described above regarding the known lifting device 304 of Figs. 5-7. The housing 300 and internal components are omitted from the illustrative drawings for simplicity of explanation of the key components of the present invention. As the reader will understand, the vehicle 800 will generally include a body 300, the body 300 housing the chassis and the internal componentry of the vehicle.

As shown, the vehicle 800 includes wheels 302. It also includes a lifting device 804. However, the lifting device 804 of the vehicle 800 differs from the known lifting device 304 of Figs. 5-7. Whereas the first ends 500a of the rotatable lift shafts 500 of the known lifting device 304 were supported by a structural cantilever support 506, the rotatable lift shafts 810 of the lifting device 804 are unsupported at their first ends 810a, i.e. unsupported at their ends 810a which are distal from the body 300 of the vehicle 800. Instead, each rotatable lift shaft 810 is entirely supported by a bearing assembly 812 which is located at the second end 810b of the lift shaft 800, the second end 810b being distal from the first end 810a. The wheels 304 are coupled to a bottom side of the chassis. The lift shafts 810 are coupled to the top of the chassis. Accordingly, the lift shafts 810 are located above the wheels 304. The lift shafts 810 extend horizontally from the body, so as to extend beyond the footprint of the wheels 302 in the X-Y direction, and are parallel to one another.

As more clearly illustrated in Fig. 9, the bearing assembly 812 includes a first bearing 812a, and a second bearing 812b. Given that the bearing assembly 812 is located at the second end 810b of the lift shaft, it follows that both the first bearing 812a and the second bearing 812b are located at or towards the second end 810b of the lift shaft. However, as can clearly be seen, the second bearing 812b is located further from the first end 810a of the lift shaft than is the first bearing 812a. Accordingly, the second bearing 812b applies a downwards force onto the lift shaft 810, so as to counterbalance the first end 810a of the lift shaft 810.

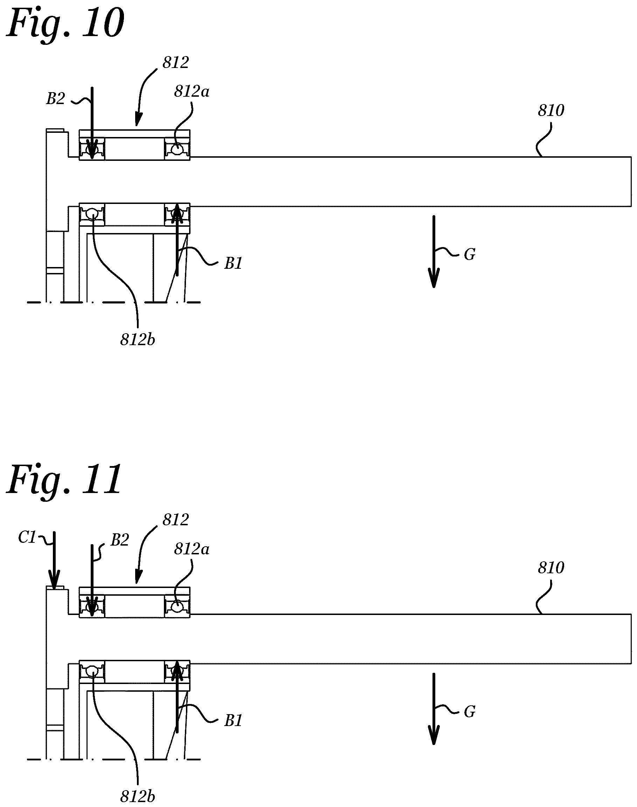

Fig. 10 shows the forces applied to the lift shaft 810 by gravity and by the bearings 812a, 812b. As shown, gravity applies a downwards force G to the lift shaft. The gravitational force G is centred on the centre of mass of the lift shaft. A downwards force B2, applied by the second bearing 812b, counterbalances the gravitational force G. Finally, an upwards force B1 is applied on the lift shaft 800 by the first bearing B1. As the reader will understand, the downwards force B2 applied to the lift shaft 800 will be larger when a container is being supported by the lift shaft 810.

In some examples, the lift drive belt (described in more detail later) may be pre-tensioned. In such an example, the lift drive belt may also provide a limited amount of downwards counterbalancing force C1 on the lift shaft 810, as illustrated in Fig. 11.

Because the forces applied to the second bearing 812b by the lift shaft 810 are smaller than the forces applied to the first bearing 812a by the lift shaft 810, the second bearing 812b may be smaller than the first bearing 812a. The use of pretensioning to provide the further counterbalancing downwards force C1 may help to further reduce the size of the second bearing 812b.

Returning to Figs. 8 and 9, the bearing assembly 812 is illustrated as a self-contained bearing unit. However, in other examples, the first and second bearings 812a, 812b may be separate components from one another. Where the bearing assembly 812 is a self-contained bearing unit, it may comprise a rigid casing 813 which encases the first and second bearings 812a, 812b. The rigid casing 813 may be a cylindrical metal casing, for example a cylindrical steel casing, which encases the bearings 812a, 812b and which is mounted to the chassis 814. The casing 813, where present, may further increase the structural support for the rotatable lift shafts 810.

With continued reference to Figs. 8 and 9, the vehicle chassis 814 is shown as comprising a horizontal base portion 814a, and a side portion 814b extending vertically from the base portion 814a. The wheels 302 are coupled to the base portion 814a. The lifting device 804 and lift drive means, on the other hand, are coupled to the side portion 814b. The side portion 814b attaches at a first end thereof to the base portion 814a, and at a second end thereof to the bearing assembly 812. The side portion 814b extends substantially perpendicularly to the base portion 814a. The body 300 of the vehicle 800 is not shown in Fig. 8. However, in practice the chassis 814 is contained within the body 300.

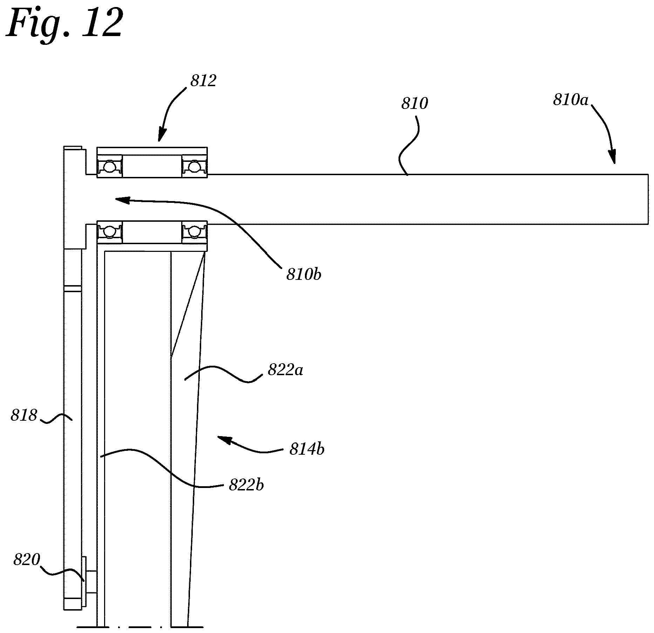

Fig. 12 shows a cross-sectional view of a close-up of the side portion 814b, lifting device 804, and components of the lift drive means. As shown, the lift drive means can comprise a lift drive wheel 820 which is coupled to a lift drive motor (not shown in Fig. 12), and a lift drive belt 818 coupled to the lift drive wheel, the lift drive belt 818 for transferring lift drive torque from the lift drive wheel to the rotatable lift shafts 810. In other examples, the lift drive means could comprise a direct drive in which the lift drive motor couples directly to the rotatable lift shafts 810 without a belt, or a planetary gear arrangement in which the lift drive wheel 820 couples to the rotatable lift shaft 810 by means of a planetary gear. The lifting device 804 includes the bearing assembly 812 and the rotatable lift shaft 810. The lift drive means and the lift drive motor are located within the chassis, i.e. inboard of the chassis. Where the lift drive means comprises a lift drive belt 818, the lift drive belt 818 is similarly inboard of the chassis, and indeed couples to the second end 810b of the lift shaft 810. Moreover, the lift drive belt 818 couples to each rotatable lift shaft 810 on an inboard side of the bearing assembly 812. Accordingly, each bearing assembly 812 is located between the lift drive belt and the first end 810a of the lift shaft 810.

The chassis 814 may be formed as a single piece. For example, the chassis may be formed by die-casting. That is, the base portion 814a and the side portion 814b may be formed as a single piece.

As can also be seen from Fig. 12, the side portion 814b of the chassis is reinforced. This may be necessary in order to provide the required structural support to the bearing assembly 812. In particular, the side portion 814b of the chassis includes an inner plate 822b, and an outer plate 822a. The outer plate 822a is attached to an outboard side of the bearing assembly 812 (e.g. adjacent the first bearing 812a), while the inner plate 822b is attached to an inboard side of the bearing assembly 812 (e.g. adjacent the second bearing 812b).

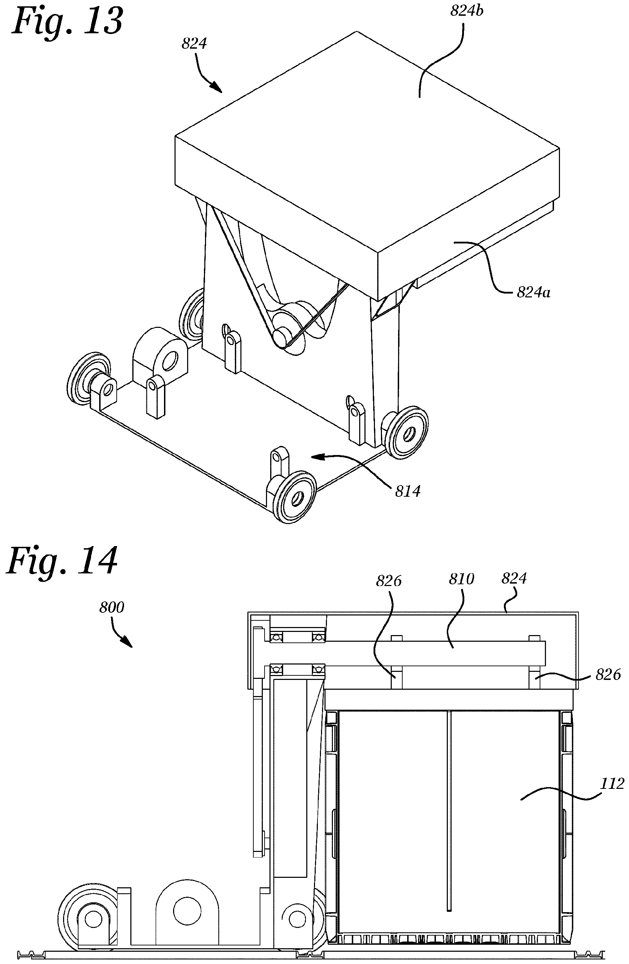

Turning to Fig. 13, an optional casing 824 is shown surrounding the lift shafts 810. The casing 812 is a non-structural element. That is, it provides no structural support to the rotatable lift shafts 810. The casing 824 may however be included to prevent impalement by the lift shafts 810. The casing 814 may be formed of a lightweight but tough material, for example plastic. It may include a top surface portion 824a, and a bumper portion 824b which extends downwardly from the top surface portion 824a. The bumper portion 824b may be of increased thickness than the top surface portion 824a. The bumper portion surrounds the rotatable lift shafts 810 in order to prevent impalement by the lift shafts 810.

Fig. 14 shows a cross-sectional view of the vehicle 800 of Fig. 13, which is carrying a container bin 112. The container bin 112 is carried by gripping device 308 (not shown in Fig. 14. Lifting lines 826 are also shown coupled to the lift shafts 810. Each lifting line 826 is attached at a first end thereof to its respective rotatable lift shaft 810, and at a second end thereof to the gripping device 308. In the depicted example, each rotatable lift shaft 810 has two lifting lines 826 attached thereto, for stability of the gripping device 308. However, a different number of lifting lines 826 may be used. During operation, winding of the lift shafts 810 in a first direction will cause the lifting lines 826 to be wound onto the lift shafts 810 in order to lift the gripping device 308 (and any container bin 112 which is gripped by the gripping device 308). Winding of the lift shafts 810 in a second (opposite) direction will cause the lifting lines 826 to be unwound from the lift shafts 810 in order to lower the container bin 112. Lifting lines 826 may comprise cables, for example steel cables, such as braided steel cables. Alternatively, the lifting lines 826 may comprise steel bands, for example steel bands having a width of at least 1cm and a thickness of 1mm or less.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A vehicle for an automated storage and retrieval system, the vehicle comprising:
a plurality of wheels for movement along rails of an automated storage and retrieval system; and
at least one rotatable lift shaft for winding and unwinding of a lifting line;
wherein the at least one rotatable lift shaft is vertically spaced from the plurality of wheels and extends from a side surface of the vehicle to form a cantilever, wherein a first end of the rotatable lift shaft which is distal from the side surface of the vehicle is unsupported;
wherein the lift shaft is rotatably mounted to the vehicle by a bearing assembly which is distal from the first end; and
wherein the bearing assembly comprises a first bearing coupled to the lift shaft, and a second bearing coupled to the lift shaft at a distal side of the lift shaft from the first bearing, the second bearing thereby counterbalancing the first end of the lift shaft.

2. The vehicle of claim 1, wherein the bearing assembly is located at or adjacent to a second end of the lift shaft, the second end being distal from the first end.

3. The vehicle of claim 1 or claim 2, further comprising a lift actuator, the lift actuator being coupled to the rotatable lift shaft at a distal side of the first bearing from the first end.

4. The vehicle of claim 3, wherein the lift actuator couples to the rotatable lift shaft at a distal side of the second bearing from the first end.

5. The vehicle of claim 3 or claim 4, wherein the lift actuator comprises a lift drive wheel and a lift drive belt, wherein the lift drive belt couples the lift drive wheel to the rotatable lift shaft, and wherein the lift drive belt couples to the rotatable lift shaft at the distal side of the first bearing from the first end, or at the distal aide of the second bearing from the first end;
optionally wherein the lift drive belt is pretensioned so as to further counterbalance the first end of the lift shaft.

6. The vehicle of any preceding claim, further comprising a gripping device for gripping storage containers, the gripping device being attached to the lifting line for raising and lowering by the rotatable lift shaft, wherein the gripping device is located under a portion of the rotatable lift shaft which extends from the side surface of the vehicle.

7. The vehicle of any preceding claim, wherein the bearing assembly is located within a footprint of the plurality of wheels.

8. The vehicle of any preceding claim, further comprising a chassis, the chassis comprising a horizontal portion, and a vertical portion extending from the horizontal portion, wherein the wheels are coupled to the horizontal portion and wherein the bearing assembly is coupled to the vertical portion.

9. The vehicle of claim 8, wherein the vertical portion comprises a first plate attached to an inboard side of the bearing assembly, and a second plate attached to an outboard side of the bearing assembly.

10. The vehicle of claim 8 or claim 9, wherein the chassis is formed as a single part, for example by die-casting.

11. The vehicle of any preceding claim, comprising a pair of rotatable lift shafts, the rotatable lift shafts being horizontally spaced from one another, wherein each rotatable lift shaft is vertically spaced from the plurality of wheels and extends from a side surface of the vehicle to form a cantilever, wherein each of the rotatable lift shafts is unsupported from a first end thereof.

12. The vehicle of claim 11, wherein the pair of rotatable lift shafts are parallel to one another.

13. The vehicle of claim 11 or claim 12, further comprising a casing surrounding the pair of cantilevered rotatable lift shafts.

14. The vehicle of claim 13, wherein the casing includes a bumper extending around an outer edge of the casing, optionally wherein at least a portion of the bumper is of increased toughness and/or increased rigidity relative to the rest of the casing.

15. An automated storage and retrieval system comprising a storage grid and at least one vehicle according to any preceding claim, the at least one vehicle configured to move along rails of the storage grid.
